# EUROPEAN PATENT APPLICATION

(11) **EP 1 591 876 A1**
(43) Date of publication of application: **02.11.2005**
(21) Application number: 04010297.2
(22) Date of filing: 30.04.2004
(51) Int. Cl.: G06F 3/033, H04N 5/445

(54) **Method of sorting elements in a list of a graphical user interface**

(71) Applicant: MATSUSHITA ELECTRIC INDUSTRIAL CO., LTD., Kadoma-shi, Osaka 571-8501 (JP)
(72) Inventor: Feiler, Michael, 65239 Hochheim (DE)
(74) Representative: Grünecker, Kinkeldey, Stockmair & Schwanhäusser Anwaltssozietät

(57) **Abstract**

A common element of graphical user interfaces is a list from which an item can be chosen by the user. The user is often offered the option to re-arrange the items or entries in such a list. This re-arranging is tedious and time consuming if items are moved one by one in large lists. Moreover in cases where such lists are stored in non-volatile memory, like EEPROM or FLASH memory, the content would have to be written after every single item is shifted. This could unduly reduce the lifetime of such a non-volatile memory. It is the object of the present invention to provide a simplified and more user-friendly way for sorting entries in a list of a graphical user interface. This object is achieved by a method which comprises the steps of displaying at least a part of the list (S11), selecting items out of the list and pasting the selected items into a second list in a defined order (S12), selecting a position in the first list, where the second list is to be inserted (S13), and inserting the items from the second list into the first list in their order in the second list, starting with the first item of the second list at the user-selected position of the first list (S14).

## Description

The invention generally relates to graphical user interfaces, and in particular to a method for sorting entries in a list of a graphical user interface.

With the wide spread of high resolution graphics, graphical user interfaces have become quite common in information and communication equipment and even in other applications like vending machines. One quite common element of such graphical user interfaces is a list from which a user can select an item of his choice. In one example these items could be television (TV) channels programmed in a TV receiver. In other examples the items might be names of musical takes or video clips or commands to be executed in a computer program.

Such lists are often generated automatically, for example by a signal scan of a TV receiver. Therefore the order of the list does not necessarily correspond to the preference of a user.

In some applications these lists may also be used with a non-graphical user interface. For example TV channels, video clips or music pieces might be selected by entering a corresponding number into a remote control.

For his own convenience, the user is often offered the option to re-arrange the items or entries in such a list. For example the user may arrange the names of TV channels in the list in such a way that he can select a certain TV channel by entering a certain preferred number. In the case of music or video titles the user might want to put the most frequently selected titles at the top of the list and the less preferred ones at the bottom. In the case of a command menu of a computer program, it is advantageous to have the most frequently required commands at the top of the list, and the more specialized and less frequently selected commands at the bottom of the list.

With a vending machine, the vendor might desire to promote certain articles by putting them on one of the first places in the list offered to a customer.

A quite common way offered in graphical user interfaces for re-arranging items in a list, is to shift them one by one until the desired arrangement is achieved. With big lists this is a tedious and time consuming procedure. For example, a satellite receiver might offer around one thousand TV channels to be selected by the user. Moreover, in many cases, such lists are stored in non-volatile memory like EEPROM or FLASH memory. In such cases the content of the lists would have to be written after every single item is shifted. This could unduly reduce the lifetime of such a non-volatile memory.

From prior art there are suggestions known to make the re-arrangement of entries more user-friendly. US 6,181,333 B1 describes a television graphical user interface with channel and programs sorting capabilities. The user can sort the program guide by TV channel numbers or in alphabetical order according to the names of the TV channels. However, this method does not allow a user defined sorting of the TV channels.

US 6,078,348 describes a television schedule system with enhanced features. A program guide has areas for displaying program schedule information. Further areas can display movie listings, and enhanced recording capabilities are provided.
A powerful feature is the ability to group shows by theme. The theme IDs stored in the show title and show description entries are utilized to match particular shows to particular themes. For example, a viewer may want to see a listing of all comedy movies. When the viewer initiates a search for a particular type of show, for example a comedy movie, each channel is inspected and theme IDs of each show listed are compared to theme IDs stored in the comedy entry of the theme sub-category table corresponding to the movie primary category entry.
With the user interface the user can sort the list of shows in time order or can find the channel with the earliest show in the sorted list. Since the programme related information has been stored in a database, a user may alphabetically sort the program titles. No other sorting algorithms are disclosed.

It is the object of the present invention to provide a simplified and more user-friendly way for sorting entries in a list of a graphical user interface.

This object is achieved by a method according to claim 1, and by an apparatus according to claim 15. Advantageous embodiments of the invention are described in the dependent claims.

According to the invention, selected items of the list are first pasted in a certain order into a second list. Then, the user selects a position in the first list where the second list is to be inserted. Thereafter the items of the second list are inserted at the specified position in the order they have in the second list, and they are deleted from the original places in the first list. This provides the user with a powerful tool to re-arrange groups of entries in the list or to even re-sort the whole list in one pass. In the case of a non-volatile memory, the method may advantageously be carried out in volatile memory like RAM or processor registers, and the contents of the list are only re-written once to the non-volatile memory after moving the whole group of entries. This prolongs the lifetime of the non-volatile memory considerably.

In the following, a more detailed description of the invention will be given and some exemplary embodiments will be described with reference to the Figures, wherein

Fig. 1 provides an overview of the steps of the method according to the present invention.

Fig. 2 shows a more detailed diagram of the steps necessary to select items out of the first list and paste them into the second list in a defined order.

Fig. 3 shows the insertion of the items from the second list into the first list in more detail.

Fig. 4 shows one possibility to delete all items contained in the second list from the original positions in the first list.

Fig. 5 shows one possible implementation of inserting all items of the second list into the first list starting at the selected position.

Fig. 6 shows one possibility to fill the empty places in the first list in more detail.

Fig. 7 shows four different alternatives of key stroke sequences to select the ninth item of the first list and paste it into the second place of the second list.

Fig. 8 shows a TV channel list of a TV receiver as one example of a list to be sorted by the method according to the present invention.

Figs. 9, 10 and 11 illustrate the selection of items in the first list and their pasting into defined positions of the second list.

Fig. 12 illustrates the generation and structure of the second list.

Fig. 13 shows the insertion of the second list in a defined position of the first list.

Fig. 14 shows the resulting TV channel list as one exemplary result of the method according to the present invention.

Fig. 15 illustrates a variant of the invention where the focus cannot be placed on items in the first list which have been pasted into the second list previously.

Figs. 16 and 17 illustrate a variant where the same item from the first list can be placed into the second list for a second time.

Fig. 18 illustrates the structure of an apparatus where the method according to the present invention can be carried out.

Fig. 19 illustrates the structure of a TV or set top box employing the method according to the present invention.

Fig. 20 shows the structure of an audio or video player employing the method according to the present invention.

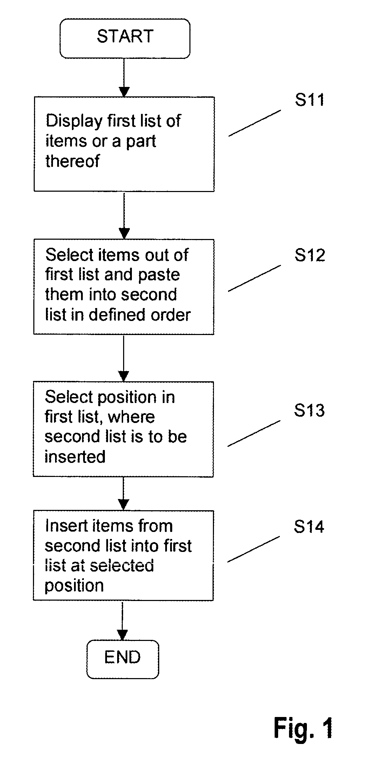

Fig. 1 lists the main steps necessary to carry out the method according to the present invention. First, in step S11 the list, here called first list of items, is displayed to the user. Next, in step S12 the user selects items of his choice out of this displayed list and pastes them into a second list in defined order.

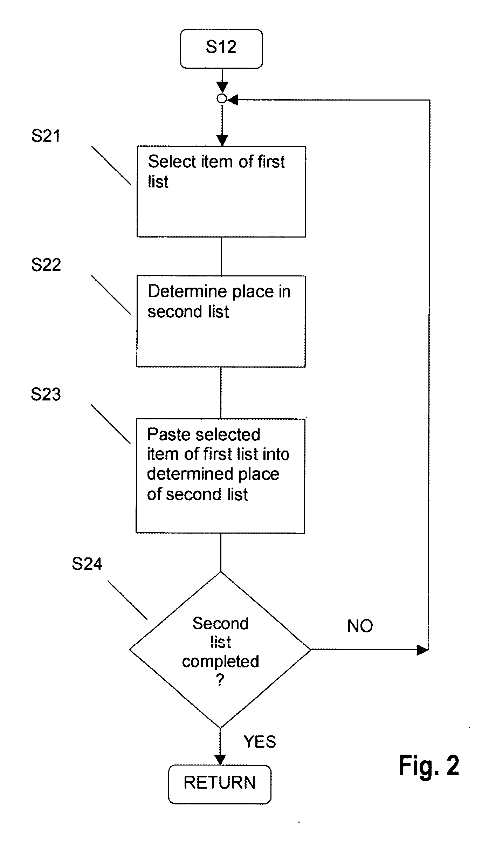

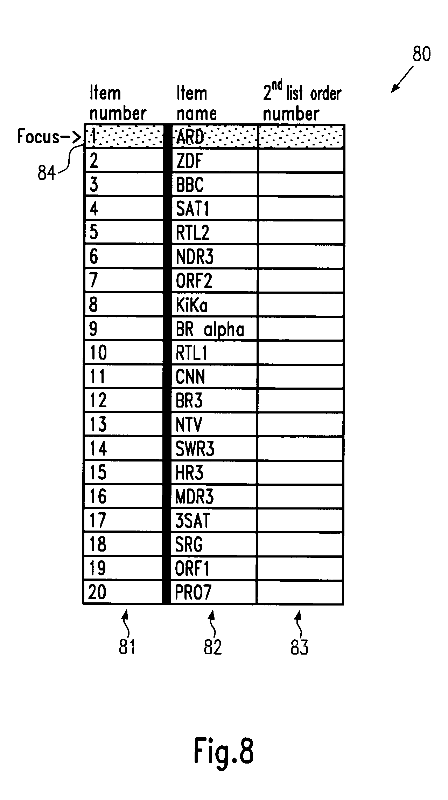

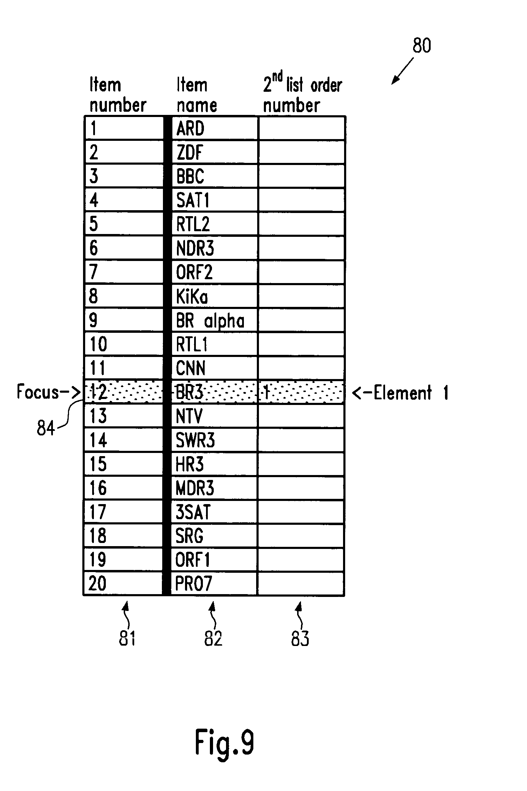

This step is explained in more detail in Fig. 2. First, in step S21, the user selects an item out of the first list. This can be done by entering a number associated with this item or entry or by moving a focus on the selected item. Fig. 8 shows such an exemplary list 80 with order numbers in column 81 and TV channel names in column 82. In this example, the focus 84 is on the first line of the list. It can be moved to another line or item by pressing cursor buttons, for example on a remote control, or by pointing and clicking with a pointing device such as a computer mouse. In Fig. 9, the focus has been moved to the twelfth line of the list, thereby selecting the twelfth entry.

Referring now back to Fig. 2, after an item of the first list has been selected in S21, a place in the second list is determined by a user in S22 where the selected item is to be pasted.

In S23 the selected item is pasted into the determined place of the second list. In the example of Fig. 9, the user has determined the first place in the second list for the highlighted item of line 12. This can be seen from the order number 1 in column 83.

Referring back to Fig. 2, in S24 the user is queried whether the second list is complete or not. If the user determines that the list is complete, for example by pressing a corresponding button, the method continues with step S13 in Fig. 1. If the list is not complete, steps S21 to S23 are repeated.

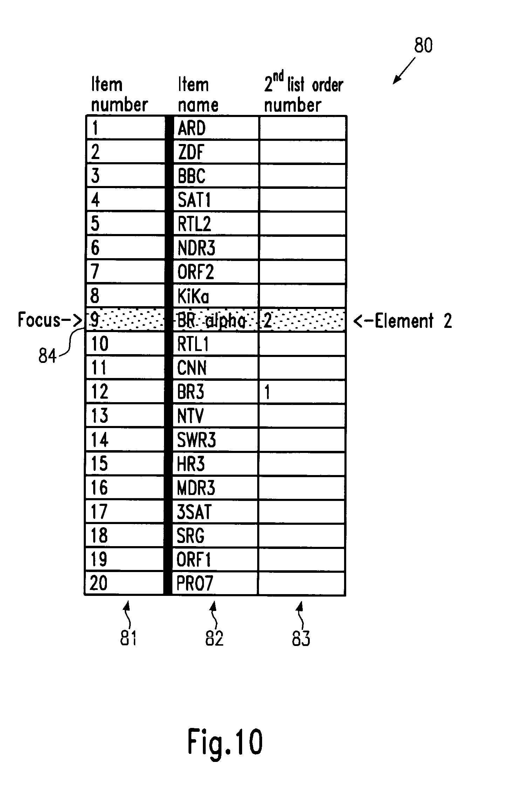

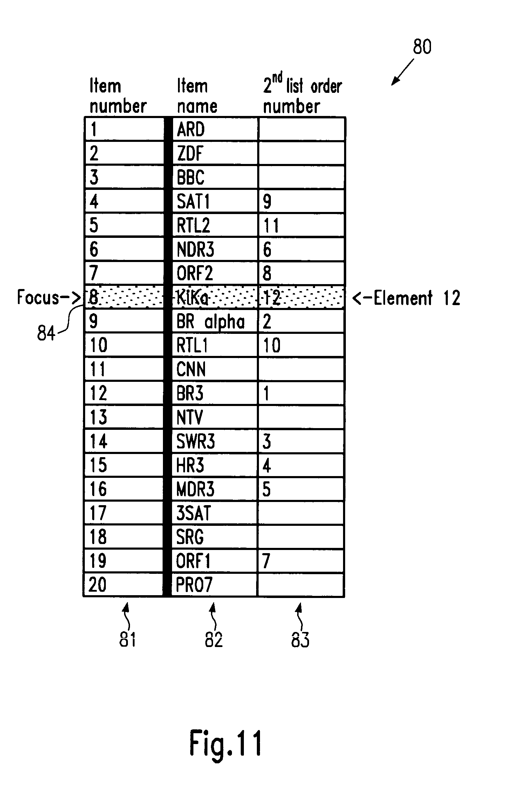

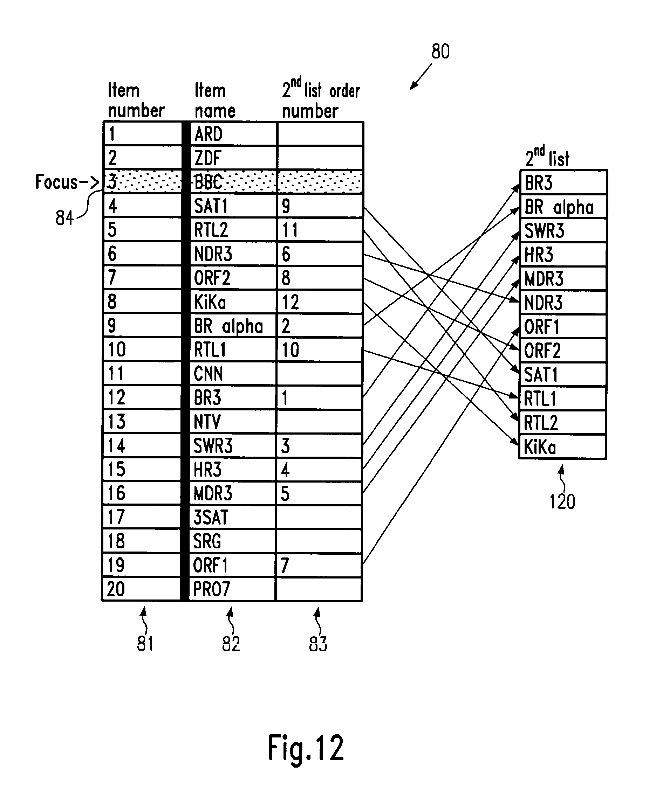

Fig. 10 shows the appearance of the exemplary list after this second turn. Fig. 11 shows the appearance of the list after this loop has been executed twelve times. In Fig. 12 the constitution of the second list is shown for the example that it has been completed after pasting twelve entries from the first list.

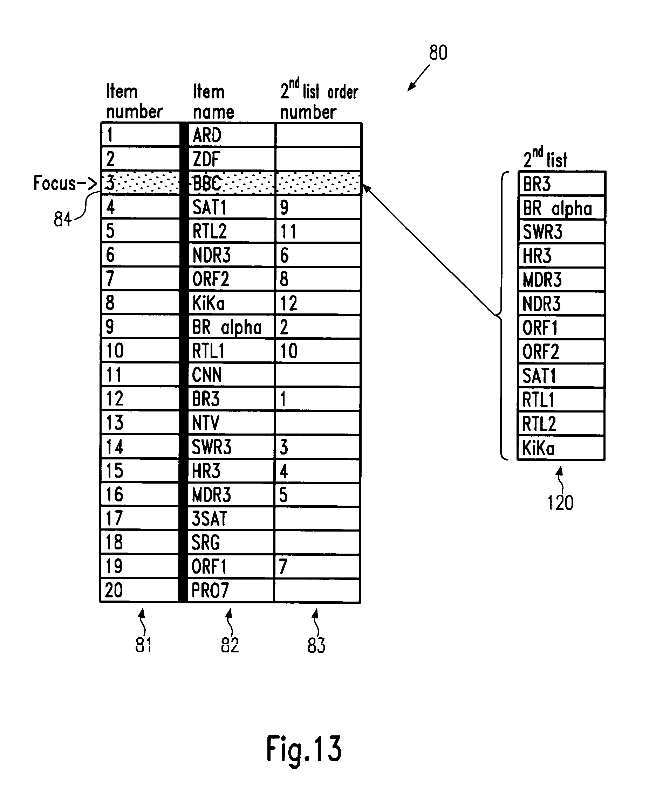

Referring now back to Fig. 1, in step S13 the user selects a position in the first list where the second list is to be inserted. This is illustrated in Fig. 13. Again, this can be achieved by moving the focus on the respective line or by entering the number of column 81, in this case "3".

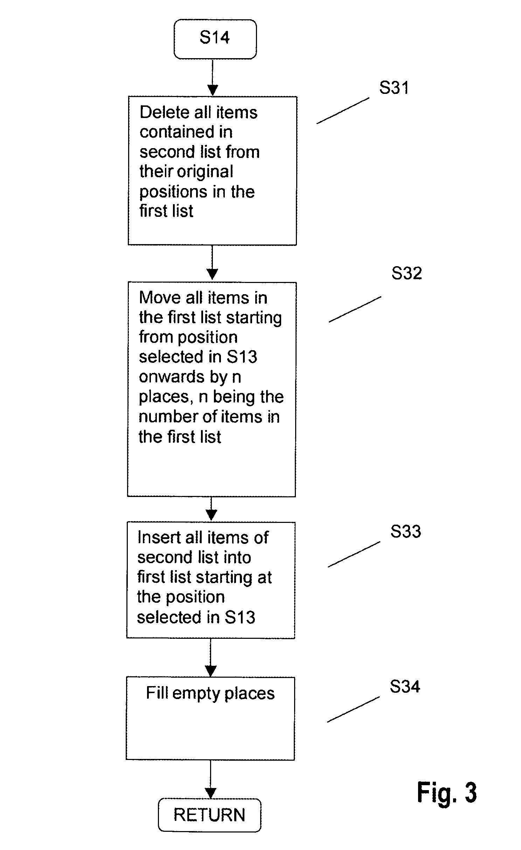

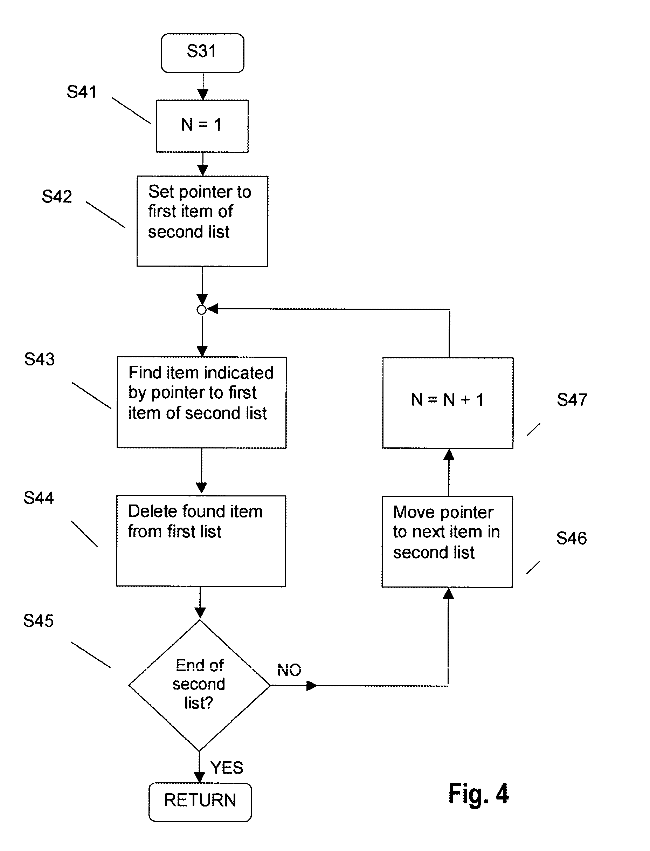

After step S13, S14 shown in Fig. 1 is executed. One possibility to carry out step S14 is explained in Fig. 3. First, in step S31 all items contained in the second list are deleted from their original positions in the first list. This can be carried out as explained in more detail in Fig. 4.

First, in step S41 a counter is preset to the value of 1. The final value of this counter is needed later on in step S32 of Fig. 3. Next, in S42 a pointer is set to the first item of the second list. Subsequently, in steps S43 and S44 the item indicated by the pointer in the second list is searched in the first list and deleted from the first list. In step S45 it is queried whether the end of the second list has been reached by the pointer. If not, the pointer is moved onto the next item of the second list in S46 and the counter is incremented in S47. After that S43 to S45 are repeated. When the end of the second list has been reached, the method carries on with step S32 in Fig. 3.

In this step all items in the first list, starting from the position which has been selected by the user in step S13, are moved onwards by as many places as items are contained in the second list. This Number is obtained from counter N of step S31. This is to free the space for the items of the second list in the specified position of the first list.

Next, in S33, all items of the second list are inserted back into the first list starting with the first item of the second list at the position selected in S13 of Fig. 1.

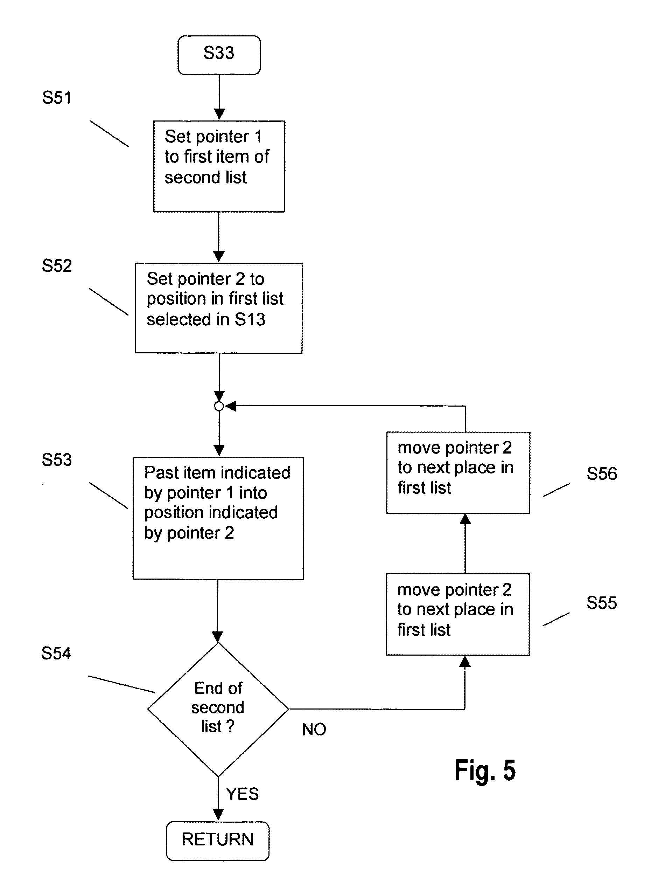

A way to carry out step S33 is explained in more detail in Fig. 5. In steps S51 and S52 a first pointer is set to the first item of the second list and a second pointer is set to the selected position in the first list. Then, in step S53 the item indicated by the first pointer in the second list is pasted into the position indicated by the second pointer in the first list. In S54 it is queried whether the first pointer has reached the end of the second list. If not, both pointers are moved on to the respective next item and placed in their list and steps S53 and S54 are repeated. When finally the first pointer has reached the end of the second list, the method returns to Fig. 3 and carries on with S34.

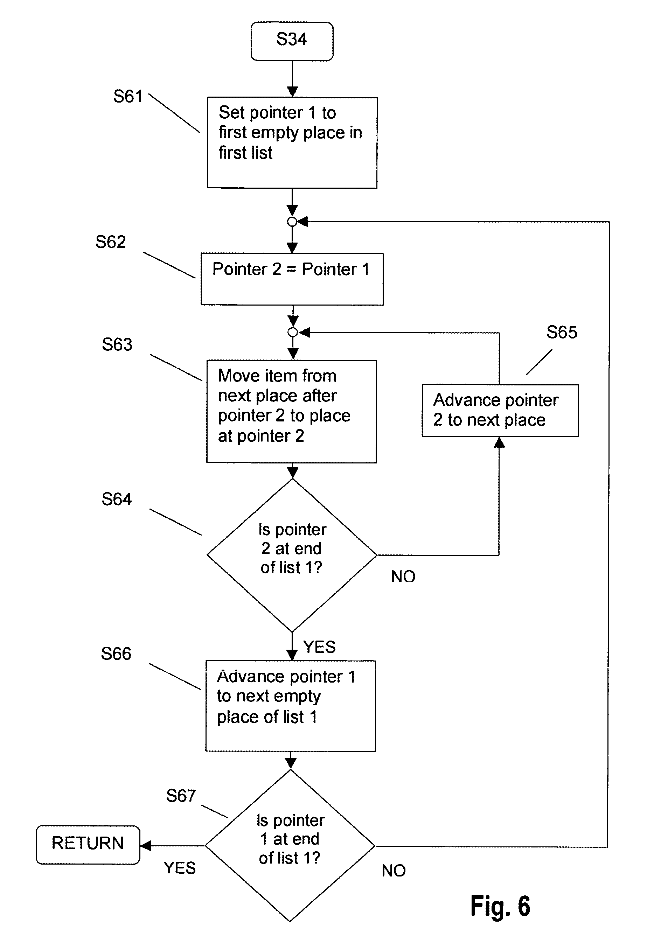

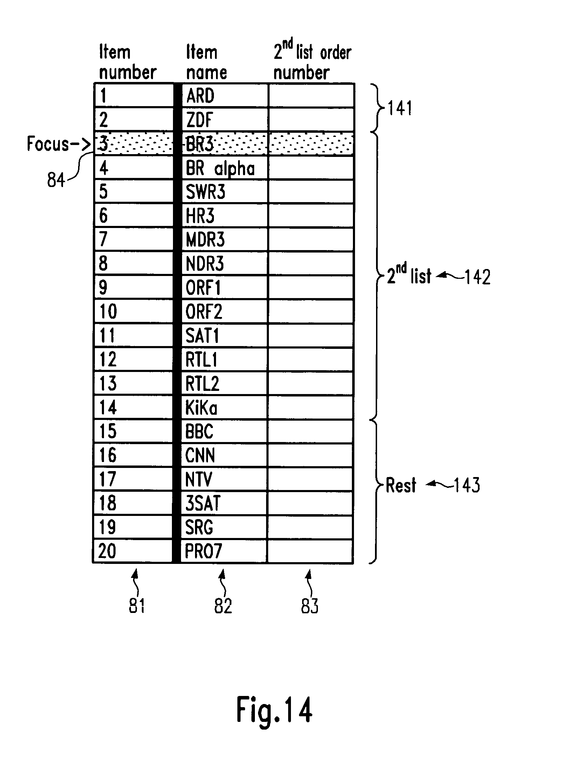

In step S34 the empty places in the first list are filled up. Each empty position is filled by moving all items in the list after the empty position one place back. One exemplary possibility to achieve this is depicted in Fig. 6. First, a first pointer is set to the first empty place in the first list in step S61. Then, in step S62, a second pointer is initialized to be equal to the first pointer. In step S63 the item from the next place after the second pointer is moved back to the place of the second pointer. In step S64 it is queried whether the second pointer has reached the end of the first list. If not, it is advanced to the next place in step S65. If finally the second pointer has reached the end of the first list, in step S66 the next empty place in list 1 is searched and the first pointer is set to it. In step S67 it is queried whether the first pointer has reached the end of the first list. If not, the procedure is repeated from step S62 onwards. If finally the first pointer has reached the end of the first list, the method is finished and the exemplary list has the appearance as shown in Fig. 14.

The first two entries in bracket 141 have not changed their position. Thereafter in bracket 142 the elements from the second list follow in the specified order. The rest of the original list follows in bracket 143. The items are in their original order, but moved to the end of the list.

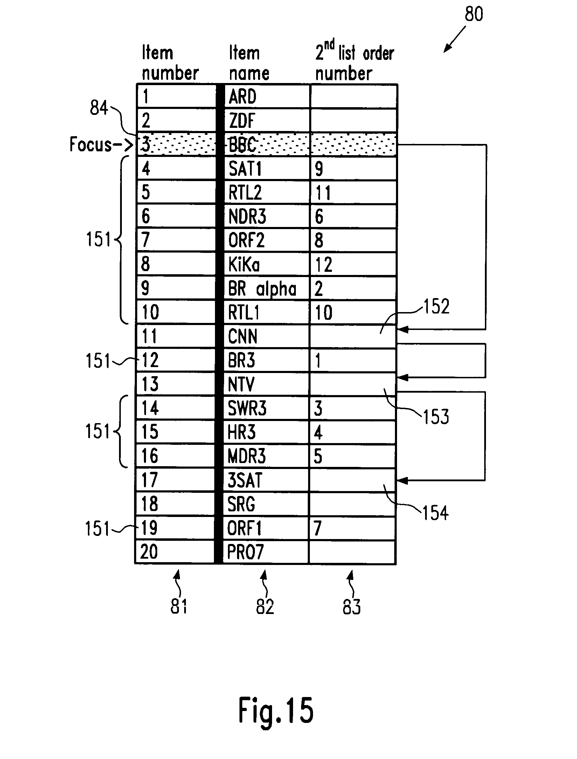

Now with reference to Figs. 15 to 17 two possible alternatives are explained with respect to items which have already been pasted into the second list.

Reference numeral 151 identifies items which have already been pasted into the second list. This can also been seen by the order numbers entered in column 83. Focus 84 in this instance is on the third line of the list. In this alternative it would not be possible to select an item of the first list which has already been pasted into the second list for a second time. Consequently, it is not possible to place the focus on such an entry. In the example of Fig. 15, if the "cursor down" button would be pressed the focus would not move to the next entry but to the eleventh line indicated by reference number 152. With a second press of the "cursor down" button the focus would move to the thirteenth line indicated by reference numeral 153 and with the next "cursor down" key press it would move to the seventeenth line indicated by reference numeral 154.

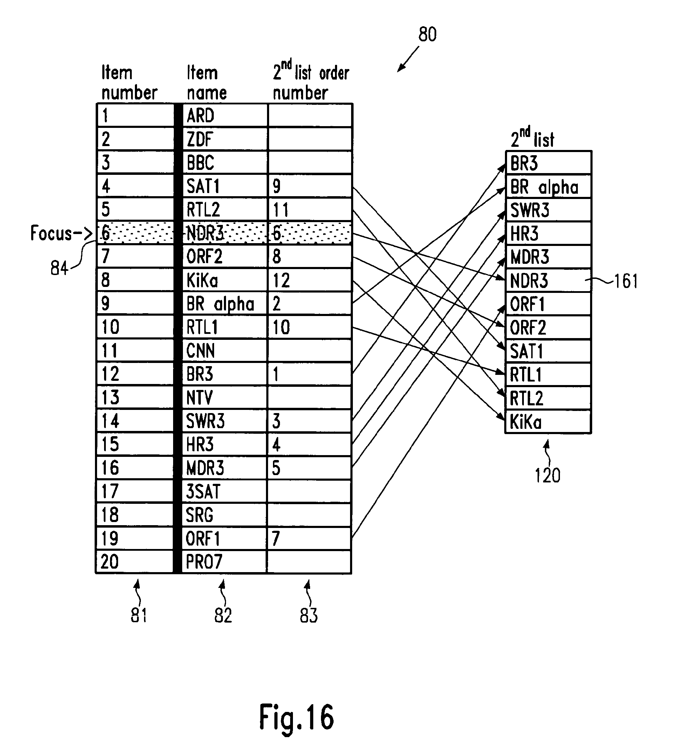

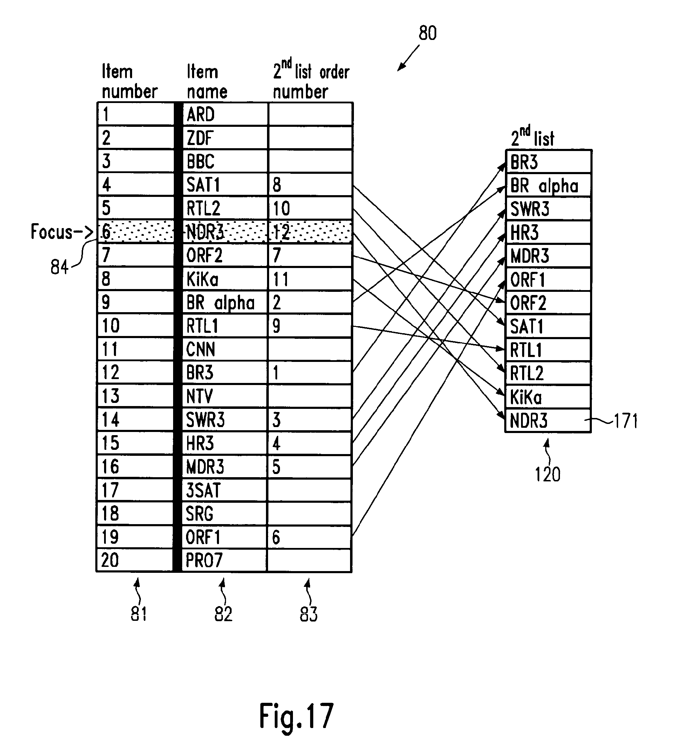

Alternatively, items which have already been pasted into the second list could be allowed to be selected and pasted a second time to another place in the second list. This provides more flexibility for the user in the case that he changes his mind. In Fig. 16 the sixth item of the first list has been selected and pasted to the sixth place of the second list indicated by reference numeral 161. In Fig. 17 the focus is put again on the sixth line of the first list and the twelfth place on the second list is specified indicated by reference numeral 171. As each item should only appear once in each list, the sixth item of the first list is deleted from the sixth place of the second list and the second list is re-arranged accordingly. This procedure will not be explained in detail, but it is apparent that a procedure equivalent to that shown in Fig. 6 can be used to fill the place from which the item has been deleted in the second list.

The contents of the second list can be indicated in the graphical user interface in different ways. As one possibility their order numbers with reference to the second list can be displayed in the first list together with the respective items. For example, in Fig. 12 these order numbers can be seen in column 83 of the first list. As a further possibility both lists can be displayed simultaneously on the graphical user interface, similar to the appearance shown in Fig. 12.

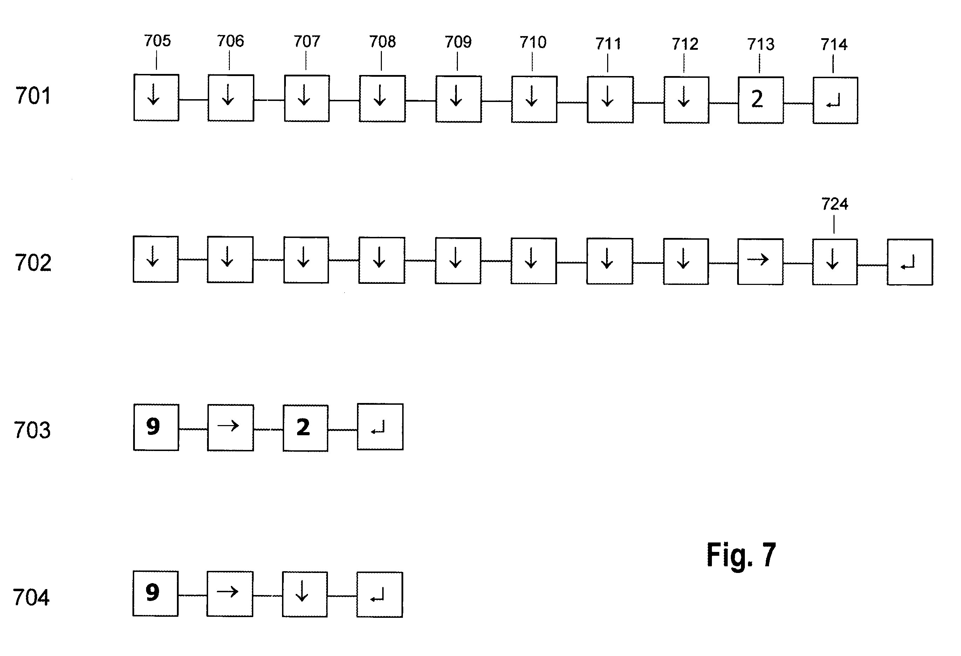

As already mentioned several possibilities exist for the user defined selection of items and positions in the first and second list. Either pointing devices like a computer mouse, joystick or a light pen could be employed. Alternatively, cursor buttons or a numeric keyboard could be used, for example in a remote control. Instead of cursor buttons, a wheel could also serve for the purpose of moving the focus in the list. Fig. 7 shows four alternative keypress sequences for the selection of the ninth item of the first list as second element of the second list according to the example in Fig. 10. It is assumed that both focuses are in the first line of each list before the entry starts. In sequence 701, the focus in the first list is moved down to the ninth line by pressing the cursor down button eight times with keystrokes 705 to 712. Then in 713 the "2" button is pressed to specify the second place of the second list before in 714 a "return" button is pressed to finalize the entry. In an alternative sequence shown in 702, the second place of the second list is specified by pressing the cursor down button once in 724. 703 shows an alternative with numerical entry only. In sequence 704, the item in the first list is specified by a numerical entry, and the place in the second list is selected with cursor buttons.

In another embodiment the selected items are placed into the second list in the order in which they are selected from the first list. For example, in Fig. 9 the twelfth item is selected by moving the focus 84 on the twelfth line of the list and subsequent pressing of a corresponding button. Therefore it is placed on the first place of the second list. In Fig. 10 the ninth item is selected next and placed on the second place of the second list, and so on.

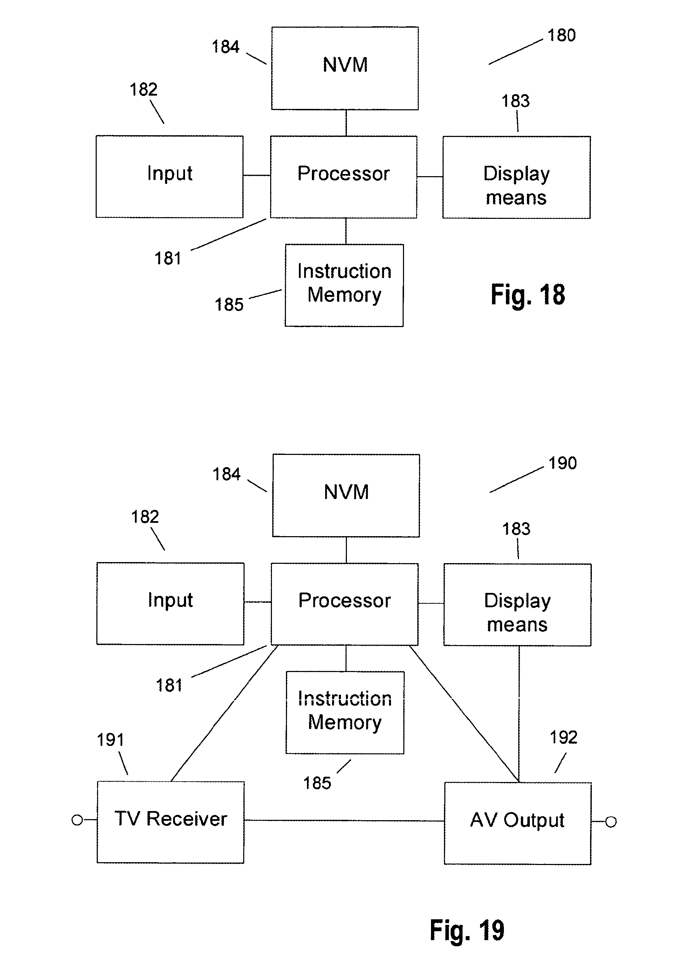

Fig. 18 illustrates the structure of an apparatus 180 which can be adapted to carry out the method described above. Apparatus 180 comprises a processor 181, input means 182, display means 183, non-volatile memory 184 and instruction memory 185. Besides EEPROM or FLASH memory, the non-volatile memory 184 could also be some magnetic, optical or magneto-optic storage means. Instruction memory 185 could be ROM, EPROM, FLASH memory or RAM. It carries the instructions that cause the processor to carry out the method described above. If the instruction memory is volatile like RAM, the instructions are loaded to instructions memory 185 after power-up from some non-volatile storage means including hard-disk, CD ROM, DVD or magnetic tape. Apparatus 180 could for example be a personal computer running a program with a graphical user interface employing the described method. In this case, the input means 182 would be a conventional computer keyboard and the display means 183 would be a computer monitor. Apparatus 180 could also comprise other elements not needed to carry out the method itself. For example, as a vending machine it could also comprise cash collecting means and goods dispensing means not depicted here.

Fig. 19 shows an application of apparatus 180 as a TV or set top box 190. It further comprises a receiving unit 191 and an audio/video output unit 192. The receiver unit 191 receives signals from the antenna. The audio/video output unit 192 delivers audio and video signals to an external device like a conventional TV set. In this case, the input means 182 could be some buttons on the set top box or a remote control. The display means 183 in the case of a TV set would preferably be an on-screen display, where the graphic user interface is superimposed to or inserted into the TV picture. In the case of a set top box, which usually does not have an own display, display means 183 could be an electronic circuit to generate the video signal of the graphical user interface, which is then superimposed to or inserted into the TV picture in the circuit of the AV output 192.

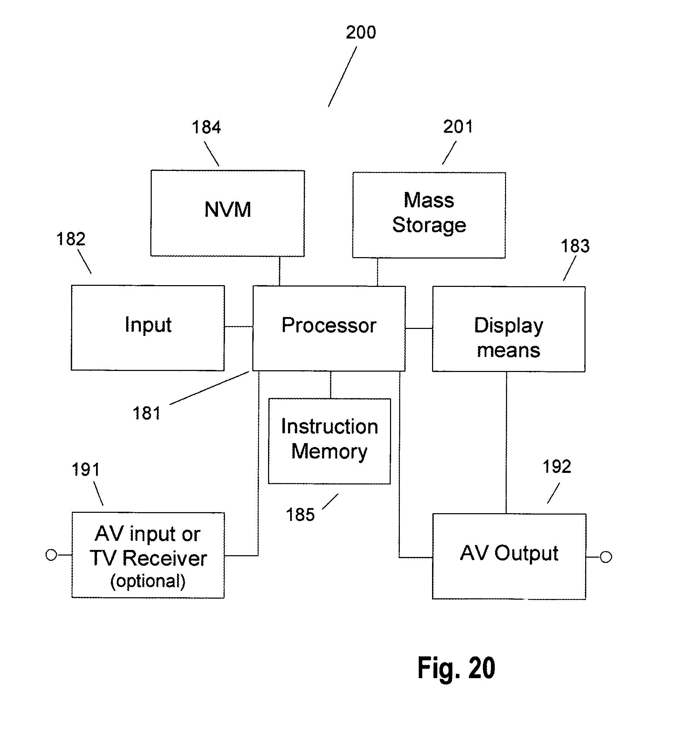

Another application of apparatus 180 in an audio or video player 200 is illustrated in Fig. 20. Besides the audio/video output unit 192, the audio/video player 200 further comprises mass storage means 201 to store a plurality of video clips or audio takes. Mass storage means 201 could be a magnetic hard disk drive or an optic disk like a compact disk (CD) or digital versatile disk (DVD). Audio/video input or receiver 202 would be optional for the case that the player also comprises a recording function.

Summarizing, it is the object of the present invention to provide a simplified and more user-friendly way for sorting entries in a list of a graphical user interface. This object is achieved by a method which comprises the steps of displaying at least a part of the list (S11), selecting items out of the list and pasting the selected items into a second list in a defined order (S12), selecting a position in the first list, where the second list is to be inserted (S13), and inserting the items from the second list into the first list in their order in the second list, starting with the first item of the second list at the user-selected position of the first list (S14).

## Claims

1. Method of rearranging items in a first list (80) of a graphical user interface, comprising the steps of
a) displaying at least a part of said first list (S11);
b) selecting items out of said first list and pasting said selected items into a second list (120) in a defined order (S12);
c) selecting a position in said first list, where said second list is to be inserted (S13);
d) inserting said items from said second list into said first list in their order in said second list, starting with a first item of said second list at said selected position of said first list (S14).

2. A method according to claim 1, wherein step d) comprises the following steps:
i.all items contained in said second list are deleted from their original position in said first list (S31);
ii.all items contained in said first list starting from said selected position are moved onwards by n places, n being a number of items contained in said second list (S32);
iii.all items contained in said second list are inserted into places in said first list made empty by step ii (S33);
iv.places in said first list made empty by step i are filled subsequently by moving all items after each of said empty place one place back (S34).

3. A method according to claim 1 or 2, wherein said first list (80) is stored in non-volatile memory (184), steps b) to d) are carried out in volatile memory and said first list is stored back to non-volatile memory (184) when steps b) to d) have been completed.

4. A method according to claim 1 to 3, wherein in step b) only items can be selected from said first list (80) which have not been pasted into said second list (120) before.

5. A method according to claim 1 to 3, wherein when an item of said first list (80), which has already been pasted into said second list (120) before, is selected in step b), said item is inserted again into a newly specified position of said second list, deleted from a position in said second list where it had been pasted before, and all items after said previous position in said second list are moved one place back.

6. A method according to one of the claims 1 to 5, wherein in step b) an item from said first list (80) is selected by entering an order number of said item in said first list.

7. A method according to one of the claims 1 to 5, wherein in step b) an item from said first list is selected by moving a focus (84) on said item.

8. A method according to one of the claims 1 to 7, wherein said order in said second list (120) is indicated by respective order numbers displayed in conjunction with said items in said first list (80).

9. A method according to one of the claims 1 to 8, wherein said second list (120) is displayed on said graphical user interface together with said first list (80).

10. A method according to claim 9 , wherein in step b) said defined order of said items in said second list (120) is determined by moving a focus on a place in said second list after one of said items has been selected from said first list (80).

11. A method according to claim 8 or 9, wherein in step b) said defined order of said items in said second list (120) is determined by entering an order number in said second list for each of said items.

12. A method according to one of the claims 8 to 9, wherein in step b) said defined order of said items in said second list (120) is determined by an order in which said items are selected.

13. A method according to one of the claims 1 to 12, wherein said items are TV channels.

14. A method according to one of the claims 1 to 12, wherein said items are audio titles or video titles.

15. An apparatus (180) being configured to provide a graphical user interface comprising at least a first list (80) containing a plurality of items, further comprising
means (181, 183) for displaying at least a part of said first list;
means (181, 182) for pasting items, selected by a user out of said first list, into a second list (120) in a defined order, and for inserting said items from said second list into said first list in their order in said second list, starting with a first item of said second list at a position of said first list selected by said user.

16. An apparatus according to claim 15, further comprising a non-volatile memory (184) for storing said fist list (80), wherein said processor (181) performs said selecting, pasting and inserting without re-writing said first list (80) to said non-volatile memory (184) before said inserting has been completed.

17. An apparatus according to claim 15 or 16, wherein said input means (182) comprise a numerical keyboard, and said items from said first list (80) are selected by entering order numbers of said items in said first list using said numerical keyboard.

18. An apparatus according to claim 15 or 16, wherein said input means (182) comprises a pointing device and an item from said first list (80) is selected by moving a focus (84) on said item using said pointing device.

19. An apparatus according to claim 15 or 16, wherein said input means (182) comprises cursor buttons or a wheel, and an item from said first list (80) is selected by moving a focus (84) on said item using said cursor buttons or said wheel.

20. An apparatus according to one of the claims 15 to 19, wherein said graphical user interface is an on-screen display.

21. An apparatus (190) according to one of the claims 15 to 20, further comprising television reception means (191) and audio/video output means (192), wherein said apparatus is configured to serve as a television or set-top box, and said items are TV channels.

22. An apparatus (200) according to one of the claims 15 to 20, further comprising mass storage means (201), wherein said apparatus is configured to serve as audio or video player and said items are audio titles or video titles.

23. A computer-readable medium (185) having stored thereon instructions that, when executed on a processor, cause the processor to carry out a method according to one of the claims 1 to 14.
